# EUROPÄISCHE PATENTSCHRIFT

(11) **EP 2 790 151 B1**
(45) Veröffentlichungstag und Bekanntmachung des Hinweises auf die Patenterteilung: **10.02.2016**
(21) Anmeldenummer: 13162957.8
(22) Anmeldetag: 09.04.2013
(51) Int. Cl.: G06T 7/00

(54) **Verfahren zur echtzeitfähigen Materialschätzung und zur materialbasierten Bildsegmentierung in elektronischen Bildsequenzen**
Method for real-time material evaluation and for material-based image segmentation in electronic image sequences
Procédé d'estimation de matériau en temps réel et de segmentation d'image basée sur le matériau dans des séquences d'images électroniques

(43) Veröffentlichungstag der Anmeldung: 15.10.2014
(73) Patentinhaber: Christian-Albrechts-Universität zu Kiel, 24118 Kiel (DE); Universität des Saarlandes, 66123 Saarbrücken (DE)
(72) Erfinder: Jordt, Andreas, 24114 Kiel (DE); Steimle, Jürgen, 55128 Mainz (DE); Koch, Reinhard, 24119 Kronshagen (DE)
(74) Vertreter: Hansen, Jochen

(56) Entgegenhaltungen:
- US-A1- 2012 321 126
- MANNAN MD A ET AL: "3D free-form object material identification by surface reflection analysis with a time-of-flight range sensor", PROCEEDINGS OF THE 12TH IAPR CONFERENCE ON MACHINE VISION APPLICATIONS, MVA 2011 - PROCEEDINGS OF THE 12TH IAPR CONFERENCE ON MACHINE VISION APPLICATIONS, MVA 2011 2011 MACHINE VISION APPLICATIONS, MVA JPN, 2011, Seiten 227-230, XP002710387,
- LI LI ET AL: "Robust Depth Camera Based Eye Localization for Human-Machine Interactions", KNOWLEDGE-BASED AND INTELLIGENT INFORMATION AND ENGINEERING SYSTEMS, SPRINGER BERLIN HEIDELBERG, BERLIN, HEIDELBERG, Bd. 6881, 12. September 2011 (2011-09-12), Seiten 424-435, XP019164763, ISBN: 978-3-642-23850-5

## Beschreibung

Die Erfindung betrifft ein Verfahren zur Materialschätzung in einer Sequenz von mittels einer elektronischen Kamera erfassten Bildern einer Szene in einer mit der Bildsequenzerfassung Schritt haltenden Geschwindigkeit. Die Erfindung betrifft weiterhin ein Verfahren zur materialbasierten Bildsegmentierung einer solchen Bildsequenz in Echtzeit.

Im Bereich der Computer Vision werden reale, bewegte Szenen mit elektronischen Kameras als eine Sequenz von elektronischen Bildern erfasst. Die Bilder werden einer Weiterverarbeitung in einem Rechner zugeführt, um Informationen über die Szene und/oder über die darin vollführten Bewegungen zu extrahieren. Die extrahierten Informationen können unter anderem zur "Mensch-Maschinen-Interaktion" (MMI, engl. Human-Computer Interaction, HCl), d.h. zur Steuerung von Maschinen, verwendet werden. Damit ein Nutzer in intuitiver Weise Eingaben vornehmen kann, soll es keine für den Nutzer merkliche Zeitverzögerung zwischen der elektronischen Bilderfassung und der Bildverarbeitung durch den Rechner geben. Die Bildverarbeitung soll abgeschlossen sein, bevor das nächste Bild der Sequenz erfasst wird, d.h. sie soll mit der Bilderfassung Schritt halten. Man spricht auch von einer Bildverarbeitung in Echtzeit. Oft wird die Bildsequenz dabei mit einer Bildrate von mehr 25 fps (frame per second) erfasst und verarbeitet. Der Nutzer nimmt dann keine Einzelbildverarbeitung mehr wahr, sondern vielmehr eine kontinuierliche Interpretation seiner Handlungen durch die Maschine.

Eine typische Teilaufgabe in der Computer Vision ist die Bildsegmentierung, also die Bestimmung inhaltlich zusammenhängender Regionen in den Bildern. Dabei wird einer Bildregion eine Interpretation in Bezug auf die Szene zugewiesen, z.B. die Zugehörigkeit zu einem in der Szene vorhandenen Objekt. Eine Bildregion kann insbesondere als wichtig oder als irrelevant für den beabsichtigten Verwendungszweck klassifiziert werden. Es ist gängig, Bildinformation von irrelevanten Daten zu bereinigen, um die Verarbeitung wichtiger Information oder auch die elektronische Übertragung der Bilder zu beschleunigen.

Relevante Information ist gewöhnlich an spezielle Objekte in der Szene geknüpft. Solch ein Objekt im Bild zu identifizieren und jene Bildpixel zu isolieren, auf die das Objekt abgebildet wird, ist eine übliche Vorgehensweise zur Bildsegmentierung. Textur und Farbe eines Objekts geben dabei auch ersten Aufschluss über die Natur des Materials, aus dem die Objektoberfläche wesentlich besteht.

Von besonderem Interesse ist die Identifikation menschlicher Haut. Haut stellt zugleich schon wegen der interindividuellen Variabilität ein in Bildern schwierig zu segmentierendes Material dar.

Aus der Veröffentlichung Mannan Md. A et al.: "3D free-form object material identification by surface reflection analysis with a time-of-flight range sensor", Proceedings of th 12th IAPR Conference on machine vision applications, MVA 2011 - Proceedings of the 12th IAPR Conference on machine vision applications, MVA 2011 2011 machine vision applications, MVA JPN, 2011, Seiten 227-230, XP002710387 ist ein Verfahren zur Materialidentifizierung mittels einer Tiefensensorkamera bekannt, bei dem eine strukturierte Beleuchtung zur Anwendung eines Tiefenbestimmungsverfahrens ausgebildet ist, wobei hierbei die räumliche Krümmung einer Pixelanordnung ausgewertet wird und nachfolgend nur nahezu plane Elemente weiterverarbeitet werden und hierbei die planen Pixelanordnungen räumlich orientiert und deren mittlere Grauwerte ermittelt werden, wobei diese an ein Modell angepasst werden, um so das Material anhand der Pixelanordnungen zu identifizieren.

Beispielsweise ist der US 2007/0116328 A1 ein Überwachungskamerasystem zu entnehmen, das dazu ausgebildet ist, in einem Videostream Bildregionen mit menschlicher Haut zu identifizieren und bei der Wiedergabe auf einem Schirm die erkannten nackten Hautpartien zumindest teilweise abzudecken oder zu verschleiern. Zur Hauterkennung bedient sich das System vorwiegend vorbekannter Farbtabellen für die in Frage kommenden Farbtöne menschlicher Haut.

Der Nachteil aller auf Farbtabellen basierender Identifikationsverfahren liegt in ihrer Unzuverlässigkeit bei teilweise abgeschatteter oder auch bei gefärbter Beleuchtung der Szene.

Besonders gravierend kann sich dies bei der Kombination einer kamerabasierten Steuerung eines Rechners mit einem Projektor, der vom Rechner generierte Farbgraphiken auf einen Schirm projiziert, auswirken, wenn ein Nutzer über den Schirm Eingaben vornehmen will. Die Kamera beobachtet in diesem Fall den Schirm als Szene, und es soll aus einer Bildsequenz in Echtzeit geschlossen werden, z.B. welche Bewegungen die Hände oder Arme des Nutzers vor dem beleuchteten Schirm ausführen oder auf welche Stelle des Schirms er zeigt. Durch das Projektionslicht werden Farben verfälscht, so dass keine Farbtabellen anwendbar sind.

Aus der Arbeit von Koike et al., "Integrating Paper and Digital Information on Enhanced Desk: A Method for Realtime Finger Tracking on an Augmented Desk System", ACM Transactions on Computer-Human Interaction, Vol. 8, No. 4, 2001, 307-322, ist ein System bekannt, das die Interaktion eines Nutzers mit dem Rechner über einen Projektionsschirm ermöglicht, indem die Arme, Hände oder sogar Finger eines Nutzers mit einer Wärmebildkamera erfasst werden. Die Bildsegmentierung zur Isolierung des Nutzers wird durch die Vorgabe eines Temperaturschwellenwertes, von dem man weiß, dass der Szenenhintergrund (hier: der Projektionsschirm und etwaig auf diesem liegende Objekte) diesen nicht überschreitet, erreicht. Ein Vorteil des Systems ist darin zu sehen, dass die Wärmebilder von der ambienten Beleuchtung im VIS-Spektrum nicht abhängen, d.h. die Umgebungsbeleuchtung und die Helligkeit der Projektion sind beliebig wählbar. Elektronische Wärmebildkameras zeichnen vorwiegend Licht im Ferninfrarot (FIR)-Spektrum auf (Größenordnung 10 µm Wellenlänge) und sind bis heute noch relativ teuer.

Seit dem Aufkommen preisgünstig erhältlicher Tiefensensorkameras, die eine aktive Beleuchtung im NIR-Spektrum durchführen, um allein oder auch zusätzlich zum normalen Helligkeitsbild ein Tiefenbild zu generieren, hat sich die MMI-Fachwelt auch der Gestenerkennung auf Basis von tiefenbasierter Bildsegmentierung zugewandt.

So werden derzeit Systeme entwickelt oder sogar schon angeboten, die mittels Beamer, Tiefensensorkamera und entsprechender PC-Software jede beliebige plane Fläche als Projektionsschirm nutzen und diesen in einen virtuellen Touchscreen umfunktionieren, an dem der Nutzer Eingaben tätigen kann. Dazu berührt der Nutzer etwa vorgegebene Punkte auf dem Projektionsschirm mit der Hand, an denen er vom Beamer projizierte Befehlssymbole (Icons) wahrnimmt. Erkennt das System eine Übereinstimmung von Hand- und Icon-Position, dann führt es einen vorbestimmten Befehl aus. Auch dieser Anwendung kommt zugute, dass die Tiefenbestimmung zur Bildsegmentierung der Nutzerhände im nicht-sichtbaren Spektrum erfolgt und so die sichtbar projizierten Graphiken nicht stört.

Heute wird auch an Projektionssystemen mit deformierbaren Projektionsschirmen gearbeitet [Alvaro Cassinelli, Masatoshi Ishikawa: Khronos Projector, Special Interest Group on Computer Graphics and Interactive Techniques Conference 2005, ACM New York]. In einer Ausführungsform dient ein einfaches Blatt aus einem Licht streuenden Material (vorzugsweise ein Lambert-Streuer im VIS-Spektrum), das der Nutzer in seinen Händen vor einen Beamer hält, als Projektionsschirm. Der Nutzer kann dann den Schirm unmittelbar mit seinen Händen deformieren, z.B. zu einem Bogen oder in Wellenform biegen oder auch tordieren, und das System bestimmt fortlaufend mittels einer Tiefenkamera die aktuelle Form des Schirms und passt die projizierte Graphik dieser Schirmform an. Die gesamte Technologie des Systems steckt in den Komponenten, mit denen der Nutzer nicht in Kontakt kommt. Der deformierbare Schirm kann im einfachsten Fall ein gewöhnliches Blatt weißes Papier sein, d.h. er ist sehr leicht austauschbar.

Unter anderem eröffnet ein System mit einem deformierbaren Schirm neuartige Möglichkeiten zur Visualisierung räumlich registrierter Datensätze. Der Nutzer kann eine nicht-planare Schnittfläche durch solche Daten in sehr intuitiver Weise festlegen und diese auch schnell variieren, um interessierenden Strukturen in den Daten zu folgen. Beispielsweise kann in einer Computer-Tomographie-Aufzeichnung eines Menschen eine Schnittfläche entlang des mehrfach gekrümmten Rückgratverlaufs festgelegt und hiernach auf einem planaren Schirm angezeigt werden.

Wenn ein Nutzer mit einem deformierbaren Projektionsschirm arbeitet, dann verdecken seine Hände nicht nur regelmäßig einen erheblichen Teil des Schirms, sondern sie können sich auch auf beiden Seiten des Schirms befinden und insbesondere sogar Teile der der Tiefenkamera zugewandten und ihr zugleich entgegengewölbten Schirmseite umfassen. Ragt die Schirmwölbung dabei über die Höhe der Hände hinaus, so kann aus den Tiefendaten allein nicht mehr ermittelt werden, welche Bildsegmente des Tiefenbildes den Nutzerhänden zuzuordnen sind.

Da der Schirm mit einer projizierten Computergraphik im VIS-Spektrum beleuchtet wird, hilft die Verwendung von Farbtabellen auch hier nicht weiter. Und durch den andauernden Kontakt der Nutzerhände mit dem Schirm erscheinen Wärmebilder ebenfalls nicht als geeignetes Mittel, die echtzeitfähige Bildsegmentierung der Nutzerhände (oder des Schirms) zu befördern. Überdies würde dies teure Zusatzgeräte erfordern, was nicht wünschenswert ist.

Aus der Physiologie ist bekannt, dass lebendes Gewebe in einigen Bereichen des langwelligen VIS- und NIR-Spektrums, den sogenannten biologischen Fenstern, Photonen eher streut als absorbiert. Menschliche Haut lässt sich daher auch anhand ihrer Streucharakteristik für diese Wellenlängen identifizieren. Ein entsprechender Vorschlag wird beispielsweise in der DE 101 28 717 A1 beschrieben.

Die Erkennung und Verfolgung eines relevanten Objekts in einer Bildsequenz anhand der Streueigenschaften des Objekts für nicht-sichtbare Strahlung ist nach Kenntnis der Erfinder noch nicht vorgeschlagen worden. Dagegen sprechen zunächst die Notwendigkeit einer geeignet ausgelegten aktiven Beleuchtung der Szene und der absehbar hohe Messaufwand zur Analyse des Streulichts, das grundsätzlich für einen Einstrahlungspunkt und seine Umgebung separat und unabhängig von anderen Einstrahlungspunkten zu detektieren ist. Letzteres steht der simultanen Beleuchtung und Auswertung einer Vielzahl von Objektpunkten in der Szene entgegen und lässt somit keine Echtzeitfähigkeit einer derartigen Objekterkennung erwarten.

Die Erfindung stellt sich deshalb die Aufgabe, eine Schätzung von Materialien in einer Szene mit einer Geschwindigkeit vorzunehmen, die Echtzeitanforderungen genügt.

Die Aufgabe wird gelöst durch ein Verfahren zur Materialschätzung in einer Sequenz von mittels einer elektronischen Kamera erfassten Bildern einer Szene in einer mit der Bildsequenzerfassung Schritt haltenden Geschwindigkeit, gekennzeichnet durch die Schritte:
a. Beleuchten der auf die Kamera abgebildeten Oberfläche der Szene mit Messlicht aus einem nicht-sichtbaren Spektralbereich, wobei
b. das Messlicht derart strukturiert ist, dass höchstens der siebte Teil der auf die Kamera abgebildeten Oberfläche der Szene beleuchtet wird,
c. Erfassen des auf jeden Pixel der Kamera durch Abbildung der Szene eingestrahlten Anteils der Intensität des Messlichts,
d. Auswählen eines zentralen Pixels und seiner Pixelumgebung als eine zusammenhängende Pixelanordnung,
e. Bestimmen des maximalen Intensitätsmesswertes der Pixelanordnung und Zuweisen dieses Wertes als Reflektivität-Maßzahl zum zentralen Pixel,
f. Bestimmen der maximalen Intensitätsmesswertdifferenz zweier Pixel der Pixelanordnung und Zuweisen dieses Wertes als Kontrast-Maßzahl zum zentralen Pixel,
g. Vergleichen der Reflektivität-Maßzahl und der Kontrast-Maßzahl mit einem vorbekannten Materialkatalog und Identifizieren eines Materials,
h. Zuordnen des Materials zu der Teilfläche der Oberfläche der Szene, die auf den zentralen Pixel abgebildet wird, und
i. Wiederholen der Schritte d bis h für eine vorbestimmte Liste von zentralen Pixeln,
wobei die strukturierte Beleuchtung der Schritte a und b zur Anwendung eines Tiefenbestimmungsverfahrens ausgebildet ist. Anwendung eines

Die Unteransprüche geben vorteilhafte Ausgestaltungen an. Dabei ist ein Unteranspruch auf ein Verfahren zur Bildsegmentierung gerichtet, das von dem Verfahren zur Materialschätzung unmittelbar Gebrauch macht. Zudem werden Verwendungsansprüche für das Verfahren zur Bildsegmentierung angegeben.

Den Ausgangspunkt der Erfindung bildet die Einsicht, dass in der Computer Vision die Essenz einer echtzeitfähigen Klassifizierung von Objekten in ihrer Unterscheidung und nicht in ihrer Analyse zu sehen ist. Der Begriff Klassifizierung ist weiter zu fassen als beispielsweise in der Medizin, wo ein Gewebe etwa nach erkennbaren Krankheitsbildern klassifiziert wird. Es kommt in der Bildverarbeitung im Kontext der vorliegenden Erfindung nicht darauf an, z.B. menschliche Haut wie in der DE 101 28 717 A1 zuverlässig als "Haut als solche" zu identifizieren, sondern nur darauf, dass ein erfasstes Streubild "nach Haut aussieht".

In diesem Sinne ist es oft unnötig, für die Objekte in einer Szene eine genaue Bestimmung der Materialien ihrer streuenden Oberflächen vorzunehmen. Vielmehr kann es auch ausreichen, diese Materialien anhand ihres Streuverhaltens zu schätzen, also nur mit vorbekannten Materialien und mit vorbekannten Streueigenschaften, die in einem Materialkatalog vorab verzeichnet worden sind, zu assoziieren. Schon eine Wahrscheinlichkeitsaussage über ein "erkanntes" Materials kann für manchen Verwendungszweck der Bildverarbeitung ausreichen.

Ein Materialkatalog ist zur Durchführung der Erfindung vom Nutzer durch Vorarbeiten zu erstellen. Der Katalog wird grundsätzlich von der aktiven Beleuchtung abhängen, die von den Objektoberflächen der Szene gestreut werden soll. Weiterhin wird der Nutzer bei der Erstellung des Materialkatalogs sein Vorwissen darüber, welche Materialien in der Szene überhaupt auftreten können, einbringen.

Erfindungsgemäß erfolgt die Beleuchtung der Szene mit strukturiertem Licht aus einem nicht-sichtbaren Spektralbereich. Vorteilhaft ist die Verwendung von Licht aus dem NIR-Spektrum. Im Folgenden wird dieses Licht als Messlicht bezeichnet.

Das Messlicht soll die gesamte Szene, die die Kamera abbilden kann, möglichst gleichmäßig beleuchten, damit Objektmaterialien an jedem Ort der Szene geschätzt werden können. Die Strukturierung des Messlichts soll jedoch derart ausgestaltet sein, dass höchstens der siebte Teil der Szenenoberfläche mit Messlicht beleuchtet wird. Insbesondere soll ein Messlichtmuster (Pattern) auf die Szenenoberfläche projiziert werden. Das Pattern kann eine Anordnung paralleler Linien, ein Gitter oder auch eine Punktverteilung sein.

Die Kamera ist erfindungsgemäß dazu ausgebildet, nur das von der Szenenoberfläche gestreute Messlicht zu detektieren. Die Sequenz von mit der Kamera erfassten Bildern umfasst somit ausschließlich Streulichtbilder der Szene.

Zu einem einzelnen Pixel eines Streulichtbildes werden erfindungsgemäß zwei Maßzahlen bestimmt, die sich aus den Messwerten der Lichtintensitäten auf diesem Pixel und denen seiner Pixelumgebung ergeben. Der Pixel und seine Pixelumgebung bilden dabei eine zusammenhängende Pixelanordnung.

Die erste Maßzahl repräsentiert die lokale Reflektivität des Objekts für das Messlicht. Erfindungsgemäß wird dem Pixel der größte Intensitätsmesswert der Pixelanordnung als Reflektivität-Maßzahl zugeordnet. Der Pixel erhält einen hohen Wert, wenn ein mit Messlicht beleuchteter Punkt der Objektoberfläche das Messlicht gut auf die Kamera reflektiert, auch dann, wenn das Streulicht nicht vorwiegend auf den Pixel selbst, sondern auf einen benachbarten Pixel gelangt. Die messbar hohe Reflektivität des Objekts wird somit auf die Nachbarschaft extrapoliert.

Die zweite erfindungsgemäße Maßzahl wird als Kontrast-Maßzahl bezeichnet. Dem Pixel wird dabei die maximale Intensitätsdifferenz aller Pixel der Pixelanordnung zugeordnet. Er erhält einen hohen Wert dann, wenn die Pixelanordnung sowohl Pixel mit hohen als auch solche mit niedrigen Intensitätsmesswerten aufweist. Materialien, in denen das Licht in verschiedenen Tiefen gestreut wird, neigen dazu, das Streulicht lateral zu verteilen, so dass sich die Intensitäten auf benachbarten Pixeln angleichen, was zu einer niedrigen Kontrast-Maßzahl führt.

Aufgrund der ermittelten Werte der zwei Maßzahlen wird dem Pixel hiernach durch Vergleich mit dem Materialkatalog ein in dem Katalog verzeichnetes Material zugewiesen. Im einfachsten Fall ist der Materialkatalog eine Tabelle, in der einer Auswahl von vorbekannten Materialien jeweils wenigstens ein Intervall für jede der beiden Maßzahlen zugeordnet ist. Liegen die zu einem Pixel ermittelten Maßzahlen innerhalb der Intervalle, wird dem Pixel dieses Material zugeschrieben.

Es ist klar, dass die auf den Kamerapixeln gemessenen Intensitäten mit wachsendem Abstand der Objekte zur Kamera abnehmen.

Besonders bevorzugt sind die Kamera und die Messlichtquelle integrale Bestandteile einer Tiefensensorkamera.

Vorzugsweise ist das Messlichtmuster ein zur Tiefenfindung geeignetes Muster, und es kann eine mit der Bildsequenzerfassung Schritt haltende Messung des Abstandes jeder Teilfläche der Oberfläche der Szene zur Kamera durchgeführt werden.

Vorzugsweise erstellt der Nutzer in Kenntnis der Möglichkeit der Abstandsmessung den Materialkatalog derart, dass die einem Material zugewiesenen wenigstens zwei Intervalle für die Maßzahlen, die für einen Pixel ermittelt werden, vom Abstand der Oberfläche des Objektes, das auf den Pixel abgebildet wird, abhängen.

Die Erfindung wird nachfolgend näher erläutert auch anhand von Figuren. Dabei zeigt:
- Fig. 1: eine schematische Skizze des Messaufbaus, in der eine Kamera ein auf zwei unterschiedliche Oberflächen projiziertes Messlichtmuster detektiert;
- Fig. 2: Realaufnahmen des NIR-Punktmusters einer handelsüblichen Tiefenkamera gestreut von Papier (oben) und menschlicher Haut (unten);
- Fig. 3: das NIR-Streubild der Haut aus Fig. 2 (unten) zusammen mit einer Aufhellung desselben (oben);
- Fig. 4: ein Schema zur Entscheidungsfindung über die Materialzuweisung bei der Bildsegmentierung auf Basis der Zugehörigkeit zu einer konvexen Hülle.

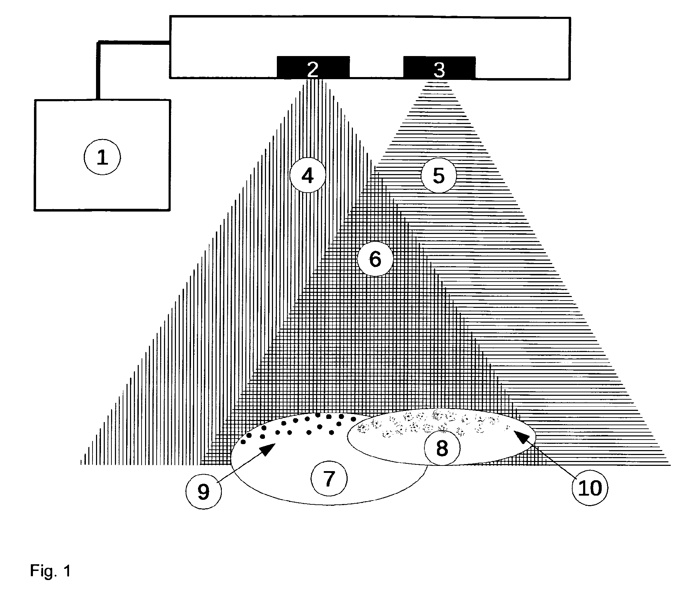

Aus Fig. 1 ist eine Skizze eines bevorzugten Aufbaus einer Messanordnung zur Durchführung der Erfindung zu sehen.

Eine Recheneinheit (1) weist hierbei wenigstens eine Datenverbindung zu einer digitalen Kamera (3) auf, um die von der Kamera (3) erfassten Bilder entgegenzunehmen und zu verarbeiten. Heute sind bereits integrierte Systeme am Markt erhältlich, die eine Recheneinheit (1), einen NIR-Messlichtprojektor (2) und eine Kamera (3) in baulicher Einheit umfassen. Der Projektor (2) projiziert ein Messlichtmuster in einen vorbestimmten Projektionsbereich (4). Die Kamera (3) besitzt einen vorbestimmten Sichtbereich (5). Ein Streubild des vom Projektor (2) projizierten Musters (hier: ein Punktmuster) ist somit im Überlappungsbereich (6) von Projektionsbereich (4) und Sichtbereich (5) von der Kamera (3) erfassbar.

Zwei im Überlappungsbereich (6) angeordnete Objekte (7, 8), deren Oberflächen aus unterschiedlichen Materialien bestehen, führen auf unterschiedliche Streubilder des vom Projektor (2) projizierten Punktmusters. Die Kamera (3) erfasst das von den Objektoberflächen (7, 8) gestreute Messlicht und "sieht" hier exemplarisch ein kontrastreiches, mit relativ scharfen Lichtspots versehenen erstes Streubild (9) und zugleich ein zweites Streubild (10), bei dem die Lichtspots eher dunkel und verwischt erscheinen.

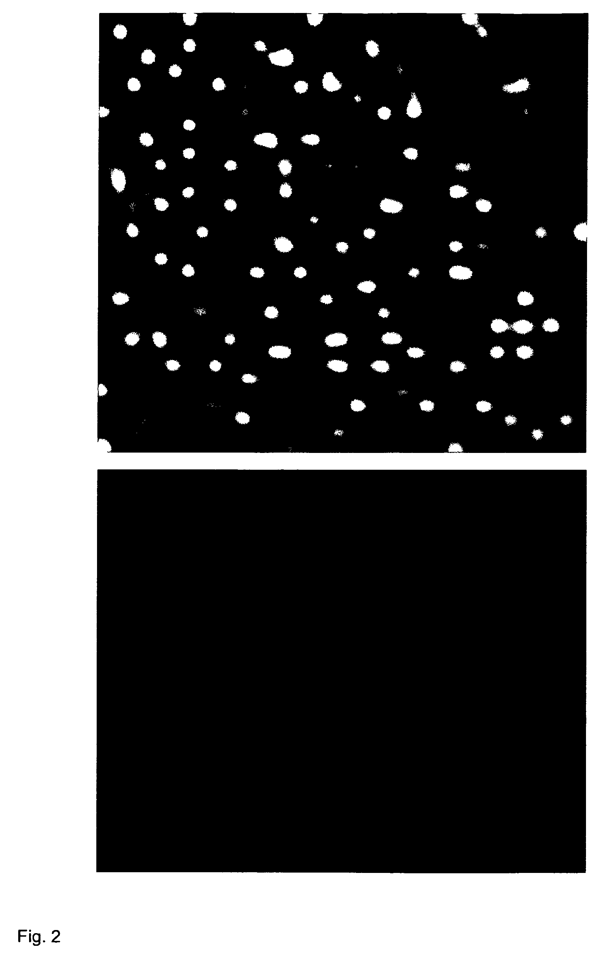

Die entsprechenden Realaufnahmen dieser Situation sind in Fig. 2 zu sehen, wobei die obere Aufnahme durch Streuung an einem weißen Blatt Papier und die untere durch Streuung an menschlicher Haut erzeugt wird. Die Realaufnahmen werden mit Messlicht der Wellenlänge 829 nm aufgezeichnet. Der Abstand der Objekte zur Kamera beträgt vorzugsweise zwischen 40 und 150 cm.

Für den menschlichen Nutzer, der z.B. eine Aufnahme gemäß Fig. 1 von einem in der Hand gehaltenen Blatt Papier vor Augen hat, ist ohne weiteres erkennbar, wo sich im Bild Papier und wo Haut befindet. Allerdings benötigt der Computer, der an die Kamera zur Bildauswertung angeschlossen ist, eine schnelle Bestimmung aller Kamerapixel, auf die das Streulicht von Papier oder Haut gelangt, um aus den Kamerapixelkoordinaten Informationen zu gewinnen. Betrachtet man das gestreute Licht aber pixelweise, ist die Zuweisung auch für das menschliche Auge nicht mehr so einfach.

Die auf einen Pixel treffende Gesamtintensität ist für sich genommen oft nicht konkludent. Zwar weist das Streubild des Papiers etliche Intensitätsspitzen auf, die eindeutig über der maximalen Streuintensität der Haut liegen, aber diese rühren vor allem von jenen Teilen der Papieroberfläche her, die - zufällig - direkt mit dem NIR-Pattern beleuchtet worden sind. Dazwischen existieren mehrheitlich dunkle Bereiche, die für den Computer so noch nicht zu klassifizieren sind.

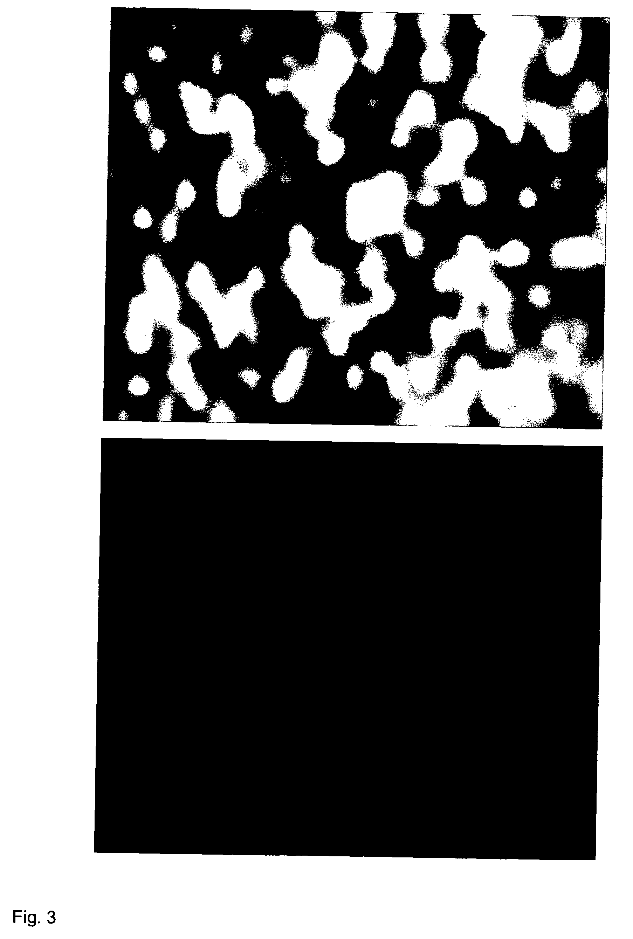

In Fig. 3 ist oben eine Aufhellung des unteren Bildes gezeigt, das dem unteren Bild in Fig. 2 entspricht. Man erkennt hier, dass die Lichtpunkte bei der Hautstreuung deutlich verwischter sind, weil die Streuung in tieferen Hautschichten erfolgt und das Streulicht die Haut teilweise neben den Lichtspots wieder verlässt. Dieser Effekt führt zu einer Angleichung der messbaren Streuintensitäten auf unmittelbar benachbarten Kamerapixeln und ist andererseits für Streuungen auf der Papieroberfläche sehr viel weniger ausgeprägt.

Um den Tiefenstreueffekt zur Materialschätzung auszunutzen und zugleich alle Oberflächen der Szene simultan bewerten zu können, muss das Messlicht so strukturiert sein, dass maximal der siebte Teil der auf die Kamera abgebildeten Oberfläche der Szene mit Messlicht beleuchtet wird(i. F. auch: Szenenausleuchtung ≤ 1/7). Zur Ermittlung dieser Obergrenze wurden künstliche Bilder von Punkt-Patterns unter Berücksichtigung von Aliasing-Effekte und Bildrauschen numerisch generiert, dabei hinsichtlich der Verwischung durch Tiefenstreuung variiert und anschließend einer erfindungsgemäßen Analyse unterworfen. Dabei wurde erkannt, dass eine höhere Szenenausleuchtung keine Schätzung der Tiefenstreuung mehr gestattet.

Das bevorzugte Pattern für das Messlicht ist ein Punktmuster. Vorzugsweise liegt die Szenenausleuchtung zwischen 1/12 und 1/9.

Die Erfindung sieht weiterhin vor, für eine vorbestimmte Liste von Kamerapixeln jeweils
- einen Pixel als zentralen Pixel auszuwählen und zusammen mit
- der Pixelumgebung des zentralen Pixels als eine zusammenhängende Pixelanordnung aufzufassen und
- die Intensitätsmesswerte aller Pixel der Pixelanordnung hinsichtlich der maximale Intensität und der maximalen Intensitätsdifferenz zwischen den Pixeln zu untersuchen und weiter
- dem zentralen Pixel daraus eine Reflektivität-Maßzahl und eine Kontrast-Maßzahl zuzuweisen.

Unter der Pixelumgebung eines zentralen Pixels sind diejenigen Pixel zu verstehen, deren Mittenabstand zum zentralen Pixel höchstens dem größten Durchmesser des zentralen Pixels entspricht. Dabei soll angenommen werden, dass die Pixel ohne Zwischenräume dicht an dicht angeordnet sind, was in realen Kameras in der Regel nicht der Fall ist. Der Mittenabstand ist der euklidische Abstand der geometrischen Mittelpunkte zweier Pixel.

Als verallgemeinerter Begriff soll auch die "Pixelumgebung mit Abstand N" hier eingeführt werden. Sie umfasst alle Pixel, deren Mittenabstand zum zentralen Pixel höchsten das N-fache des größten Durchmessers des zentralen Pixels beträgt. Eine Pixelumgebung ohne Abstandsangabe ist im Kontext dieser Beschreibung mit einer Pixelumgebung mit Abstand 1 identisch.

Gängige Kameras weisen quadratische Pixel und eine Anordnung der Pixel in rechtwinklig zueinander orientierten Zeilen und Spalten auf. In diesem Fall umfasst die Pixelumgebung die acht um den zentralen Pixel angeordneten Pixel, d.h. die zusammenhängende Pixelanordnung, die zur Bestimmung der Maßzahlen herangezogen wird, ist eine quadratische Anordnung aus 3 x 3 Pixeln.

Entsprechend umfasst dann beispielsweise eine Pixelumgebung mit Abstand 3 insgesamt 48 Pixel, die zusammen mit dem zentralen Pixel eine quadratische Anordnung aus 7 x 7 Pixeln bilden.

Offenkundig bildet der gewählte zentrale Pixel auch im Wortsinne das Zentrum der beschriebenen Pixelanordnung. Er wird aus einer vorbestimmten Liste von Pixeln ausgewählt, die vorzugsweise fast alle Pixel der Kamera enthält. Ausgenommen sind vorzugsweise Randpixel der Kamera, für die sich keine Pixelumgebung im vorgenannten Sinne definieren lässt.

Die Erfindung sieht weiter vor, die für den jeweils gewählten zentralen Pixel gewonnenen Maßzahlen in eine Materialzuweisung zu übersetzen. Hierfür soll sich der Computer eines vorab vom Nutzer erstellten Materialkatalogs bedienen. Dabei kann das Erstellen des Materialkatalogs für beliebige Anwendungen eine formidable Aufgabe sein, die vom Nutzer eine große Zahl an Voruntersuchungen und Eingaben verlangt, möglicherweise auch Interpolationen und komplexe Fallunterscheidungen.

Der Materialkatalog soll vorzugsweise in der Lage sein, zu jedem Paar aus Reflektivität- und Kontrast-Maßzahl und ggf. in Abhängigkeit vom Abstand der Kamera zum abgebildeten Objekt wenigstens ein Material vorzuschlagen. Die Gesamtheit der Daten, die zum Auffinden wenigstens eines Materials im Materialkatalog erforderlich sind, d.h. in diesen einzugeben sind, soll im Folgenden als Eingabetupel benannt sein.

Es kann ebenso vorgesehen werden, dass der Materialkatalog zu einem einzelnen Eingabetupel mehrere Materialien mit jeweils einer Wahrscheinlichkeitsangabe vorschlägt. Insbesondere kann dann der Nutzer im Zuge der Durchführung der Erfindung vorsehen, für einen zentralen Pixel zunächst das Eingabetupel aus den Intensitätsmesswerten zu ermitteln, danach die im Materialkatalog verzeichneten Materialien mit jeweils zugewiesenen Wahrscheinlichkeiten auszulesen und schließlich das Material mit der höchsten Wahrscheinlichkeit dem zentralen Pixel zuzuweisen.

Der Materialkatalog ist für eine konkrete Aufgabe vorbestimmt und wird bevorzugt in Form einer Lookup-Tabelle in einem elektronischen Speicher vorgehalten. Aus praktischen Gründen ist klar, dass der Materialkatalog einen endlichen Definitionsbereich besitzen muss, d.h. dass er nur für eine kompakte Menge von Eingabetupeln Ausgaben liefern kann. In Kenntnis der Aufgabe ist der Definitionsbereich jedoch vorbekannt. Er hängt insbesondere von der Messlichtquelle, der maximalen, in der Szene vorhandenen Reflektivität und vom maximalen Abstand der Objekte zur Kamera ab.

Der Definitionsbereich kann auch Intervalle für die Eingabetupel aufweisen, zu denen der Materialkatalog kein Material enthält. Solche "leeren Seiten" des Materialkatalogs sind jedenfalls unproblematisch, wenn von der Messaufgabe her bekannt ist, dass Eingabetupel in diesen Intervallen nicht auftreten können. Sie können auch dazu dienen, eine Störung der Szene durch ein an sich dort nicht vorgesehenes oder sogar nicht erlaubtes Objekt anzuzeigen und eine Fehlerbehandlungsroutine aufzurufen.

Insbesondere kann vorgesehen werden, leere Seiten des Materialkatalogs mit einer vorbestimmten Ausgabe (z.B. "Unbekanntes Material") zu verknüpfen. Diese vorbestimmte Ausgabe kann als Auslöser einer Fortbehandlung der Materialbestimmung mit anderen Algorithmen wirksam werden.

Dies ist von besonderer Bedeutung in der Bildsegmentierung, wenn die Messaufgabe darin besteht, in den Bildern einer Bildsequenz ein vorbestimmtes Material auszumachen und anhand von Kamerapixelkoordinaten fortlaufend während der Sequenz zu lokalisieren, und diese Lokalisierungsinformation einer weiteren Verarbeitung zuzuführen. Im Allgemeinen werden alle in der Szene auftretenden Objekte, die nicht das vorbestimmte Material aufweisen, in der weiteren Verarbeitung ignoriert. Es kommt folglich nicht darauf an, die Materialien der ignorierten Objekte zu bestimmen.

Demgegenüber ist es aber für die Segmentierungsaufgabe wesentlich, für jeden betrachteten Kamerapixel eine Entscheidung zu treffen, ob ihm das vorbestimmte Material zuzuordnen ist oder nicht.

Zu diesem speziellen Entscheidungszweck kann daher ein "dezidierender" Materialkatalog für ein vorbestimmtes Material erstellt werden, der
a. für wenigstens ein Intervall der Reflektivität-Maßzahl und wenigsten ein Intervall der Kontrast-Maßzahl das Vorliegen des vorbestimmten Materials indiziert und
b. für wenigstens ein Intervall der Reflektivität-Maßzahl und wenigsten ein Intervall der Kontrast-Maßzahl das Nicht-Vorliegen des vorbestimmten Materials indiziert und
c. für alle anderen Reflektivität-Maßzahlen und Kontrast-Maßzahlen das Vorliegen eines unbekannten Materials indiziert.

Ein dezidierender Materialkatalog umfasst somit Bereiche von Eingabetupeln, die eindeutig für das Vorliegen des Materials sprechen, sowie solche, die eindeutig das Vorliegen des Materials ausschließen. Alle übrigen Bereiche des Definitionsbereichs des dezidierenden Materialkatalogs zeigen durch die Auskunft, dass das Material nicht bekannt bzw. identifizierbar sei, an, dass eine Weiterbehandlung erforderlich ist.

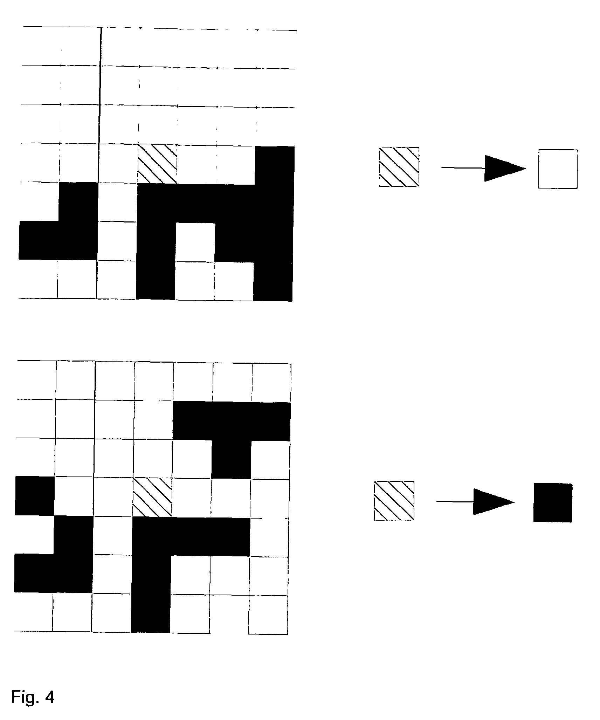

Ein effektives Beispiel für eine geeignete Weiterbehandlung, mit der sich die Bildsegmentierung dann auch vollenden lässt, ist die Zuordnung eines Materials zu einem zentralen Pixel in Anbetracht seiner Pixelumgebung. In den beiden Skizzen der Fig. 4 sind zentrale Pixel jeweils mit einer Pixelumgebung mit Abstand 3 dargestellt. In beiden Skizzen ist dem zentralen Pixel aus dem dezidierenden Materialkatalog ein unbekanntes Material (dargestellt als Pixel mit Schraffur) zugewiesen worden, was die Nachuntersuchung zur Entscheidungsfindung auslöst. Für alle umgebenden Pixel wurde indes bereits entschieden, dass ihnen das vorbestimmte Material entweder zugeordnet wird (schwarze Pixel) oder nicht (weiße Pixel).

Aus den bekannten Koordinaten der schwarzen Pixel wird erfindungsgemäß eine konvexe Hülle berechnet. Die konvexe Hülle ist die kürzeste geschlossene Linie, die alle schwarzen Pixel - z.B. wenigstens ihre Mittelpunkte - umschließt und in der jede Verbindungslinie zwischen je zwei schwarzen Pixeln - z.B. zwischen zwei Mittelpunkten - vollständig innerhalb der geschlossenen Linie liegt. Diese Definition ist an ein gängiges Äquivalent aus der Mathematik angelehnt und in der Terminologie der Bildbearbeitung üblich und dem Fachmann geläufig.

In der oberen Skizze von Fig. 4 liegt der zentrale Pixel knapp außerhalb der konvexen Hülle der schwarzen Pixel, und deshalb wird ihm nun das Nicht-Vorliegen des Materials (also weiß) zugeordnet. Im Gegensatz dazu umgeben die schwarzen Pixel in der unteren Skizze in Fig. 4 den zentralen Pixel derart, dass er innerhalb der konvexen Hülle liegt. Er erhält die Zuweisung schwarz, d.h. ihm wird das Vorliegen des vorbestimmten Materials zugeordnet.

Im vorbeschriebenen Beispiel ist die konvexe Hülle auf einer Pixelumgebung mit Abstand 3 bestimmt worden, was eine bevorzugte Ausgestaltung aber keine zwingende Notwendigkeit ist. Größere Pixelumgebungen können für manche Zwecke besser geeignet sein, erfordern aber zwangsläufig mehr Rechenzeit. Der Abstand 3 hat sich für die Echtzeit-Anwendung bei der Bildsegmentierung im Zusammenhang mit der Nutzung deformierbarer Displays als zweckmäßig erwiesen.

Die hier beschriebene Erfindung ist ganz besonders geeignet zur Verwendung bei der echtzeitfähigen Bildsegmentierung von Bildsequenzen von Szenen, in denen nur wenige vorbekannte Materialien vorkommen können, die sich hinsichtlich ihrer Streueigenschaften zudem deutlich unterscheiden. Dies gilt beispielsweise und bevorzugt für Szenen, in denen nur ein oberflächenstreuendes (insbes. Lambert-streuendes) und ein volumenstreuendes Material auftreten. Besonders bevorzugt kann die Erfindung bei der Segmentierung von biologischem Gewebe, insbesondere menschlicher Haut, verwendet werden.

In den eingangs geschilderten Anwendungen, in denen ein Nutzer Eingaben mit der bloßen Hand vor einem mit sichtbarem Licht beleuchteten Projektionsschirm vornimmt, sind die Voraussetzungen zur Verwendung der Materialschätzung mit einem dezidierenden Materialkatalog und zur anschließenden Bildsegmentierung sehr gut erfüllt. Das sichtbare Licht, mit dem eine computergenerierte Graphik auf den Projektionsschirm projiziert wird, hat keinerlei Einfluss auf die Materialschätzung bei beliebigen Umgebungslichtverhältnissen. Berührt der Nutzer den Schirm, spielen weder Wärmekontakt noch die Auflösung einer Tiefenfindung für die Segmentierung der Nutzerhand eine Rolle. Und der Nutzer kann den Projektionsschirm sogar so verbiegen, dass ein Teil des Schirms der Kamera näher kommt als die Nutzerhand, ohne dass eine hieraus eine Fehlschätzung der Handposition resultieren würde.

## Patentansprüche

1. Verfahren zur Materialschätzung in einer Sequenz von mittels einer elektronischen Kamera erfassten Bildern einer Szene in einer mit der Bildsequenzerfassung Schritt haltenden Geschwindigkeit, **gekennzeichnet durch** die Schritte:
a. Beleuchten der auf die Kamera abgebildeten Oberfläche der Szene mit Messlicht aus einem nicht-sichtbaren Spektralbereich, wobei
b. das Messlicht derart strukturiert ist, dass höchstens der siebte Teil der auf die Kamera abgebildeten Oberfläche der Szene beleuchtet wird,
c. Erfassen des auf jeden Pixel der Kamera **durch** Abbildung der Szene eingestrahlten Anteils der Intensität des Messlichts,
d. Auswählen eines zentralen Pixels und seiner Pixelumgebung mit Abstand 1 als eine zusammenhängende Pixelanordnung,
e. Bestimmen des maximalen Intensitätsmesswertes der Pixelanordnung und Zuweisen dieses Wertes als Reflektivität-Maßzahl zum zentralen Pixel,
f. Bestimmen der maximalen Intensitätsmesswertdifferenz zweier Pixel der Pixelanordnung und Zuweisen dieses Wertes als Kontrast-Maßzahl zum zentralen Pixel,
g. Vergleichen der Reflektivität-Maßzahl und der Kontrast-Maßzahl mit einem vorbekannten Materialkatalog und Identifizieren eines Materials,
h. Zuordnen des Materials zu der Teilfläche der Oberfläche der Szene, die auf den zentralen Pixel abgebildet wird, und
i. Wiederholen der Schritte d bis h für eine vorbestimmte Liste von zentralen Pixeln,
wobei
die strukturierte Beleuchtung der Schritte a und b zur Anwendung eines Tiefenbestimmungsverfahrens ausgebildet ist.

2. Verfahren nach Anspruch 1, **dadurch gekennzeichnet, dass** der vorbekannte Materialkatalog eine Tabelle umfasst, in der einer Auswahl von Materialien jeweils wenigstens ein Intervall für die Reflektivität-Maßzahl und wenigstens ein Intervall für die Kontrast-Maßzahl bei der Beleuchtung gemäß der Schritte a und b zugeordnet ist.

3. Verfahren nach Anspruch 2, **dadurch gekennzeichnet, dass** eine mit der Bildsequenzerfassung Schritt haltende Messung des Abstandes jeder Teilfläche der Oberfläche der Szene zur Kamera durchgeführt wird.

4. Verfahren nach den Ansprüchen 2 bis 3, **dadurch gekennzeichnet, dass** den Materialien im Materialkatalog Intervalle für die Reflektivität-Maßzahl und für die Kontrast-Maßzahl zugewiesen werden, welche zusätzlich vom Abstand derjenigen Teilfläche der Oberfläche der Szene zur Kamera abhängen, für die das Material identifiziert wird.

5. Verfahren nach einem der vorangehenden Ansprüche, **dadurch gekennzeichnet, dass** ein dezidierender Materialkatalog für ein vorbestimmtes Material erstellt wird, der
a. für wenigstens ein Intervall der Reflektivität-Maßzahl und wenigsten ein Intervall der Kontrast-Maßzahl das Vorliegen des vorbestimmten Materials indiziert und
b. für wenigstens ein Intervall der Reflektivität-Maßzahl und wenigsten ein Intervall der Kontrast-Maßzahl das Nicht-Vorliegen des vorbestimmten Materials indiziert und
c. für alle anderen Reflektivität-Maßzahlen und Kontrast-Maßzahlen das Vorliegen eines unbekannten Materials indiziert.

6. Verfahren zur materialbasierten Bildsegmentierung einer Sequenz von mittels einer elektronischen Kamera erfassten Bildern einer Szene in einer mit der Bildsequenzerfassung Schritt haltenden Geschwindigkeit mit dem Verfahren nach Anspruch 5, wobei einer Teilfläche der Oberfläche der Szene und den diese Teilfläche abbildenden Pixeln das vorbestimmte Material zugeordnet wird, **dadurch gekennzeichnet, dass**
a. für einen ersten zentralen Pixel, dem ein unbekanntes Material zugeordnet wird,
b. in einer Pixelumgebung des ersten zentralen Pixels mit vorbestimmtem Abstand N > 1
c. die Koordinaten von zweiten zentralen Pixeln, denen das Vorliegen des vorbestimmten Materials zugeordnet wird, bestimmt werden und
d. aus den Koordinaten eine konvexe Hülle berechnet wird, wobei
e. dem ersten zentralen Pixel das Vorliegen des Materials zugeordnet wird, wenn er sich im Inneren der berechneten konvexen Hülle befindet, und anderenfalls das Nicht-Vorliegen des Materials zugeordnet wird, wonach
f. über die Weiterverarbeitung des Pixels entschieden wird.

7. Verfahren nach Anspruch 6, **dadurch gekennzeichnet, dass** die Koordinaten der zweiten zentralen Pixel und die konvexe Hülle auf einer Pixelumgebung mit Abstand N=3 um den ersten zentralen Pixel bestimmt werden.

8. Verwendung des Verfahrens nach einem der Ansprüche 6 oder 7 bei der Bildsegmentierung einer Sequenz von Bildern einer Szene, in der das einer Teilfläche der Oberfläche der Szene zugeordnete vorbestimmte Material ein biologisches Gewebe, insbesondere menschliche Haut, ist.

9. Verwendung des Verfahrens nach einem der Ansprüche 6 oder 7 bei der Bildsegmentierung einer Sequenz von Bildern einer Szene, in der eine menschliche Hand Bewegungen vor einem Projektionsschirm ausführt, während der Projektionsschirm mit einer sichtbaren computergenerierten Graphik beleuchtet wird.

10. Verwendung des Verfahrens nach einem der Ansprüche 6 oder 7 bei der Bildsegmentierung einer Sequenz von Bildern einer Szene, in der eine menschliche Hand Bewegungen in Kontakt mit einem Projektionsschirm ausführt, während der Projektionsschirm mit einer sichtbaren computergenerierten Graphik beleuchtet wird.

11. Verwendung des Verfahrens nach einem der Ansprüche 6 oder 7 bei der Bildsegmentierung einer Sequenz von Bildern einer Szene, in der eine menschliche Hand Bewegungen in Kontakt mit einem Projektionsschirm ausführt und den Projektionsschirm deformiert, während der Projektionsschirm mit einer sichtbaren computergenerierten Graphik beleuchtet wird.

## Claims

1. Method for material estimation in a sequence of images of a scene, acquired by means of an electronic camera, in a speed keeping up with the image sequence acquisition, **characterised by** the steps of:
a. illuminating the surface of the scene imaged on the camera with measuring light from a non-visible spectral range,
b. the measuring light being structured in such a way that at most the seventh part of the surface of the scene imaged on the camera is illuminated,
c. detecting the proportion of the intensity of the measuring light radiated onto each pixel of the camera by imaging the scene,
d. selecting a central pixel and its pixel environment with distance 1 as a continuous pixel arrangement,
e. determining the maximum intensity measured value of the pixel arrangement and assigning this value as reflectivity magnitude to the central pixel,
f. determining the maximum intensity measured value difference between two pixels of the pixel arrangement and assigning this value as contrast magnitude to the central pixel,
g. comparing the reflectivity magnitude and the contrast magnitude with a previously known material catalogue and identifying a material,
h. allocating the material to the partial area of the surface of the scene which is imaged on the central pixel, and
i. repeating steps d to h for a predetermined list of central pixels,
the structured illumination of steps a and b being designed for application of a depth determination method.

2. Method according to claim 1, **characterised in that** the previously known material catalogue comprises a table in which a selection of materials are in each case allocated at least one interval for the reflectivity magnitude and at least one interval for the contrast magnitude in the illumination according to steps a and b.

3. Method according to claim 2, **characterised in that** a measurement, keeping up with the image sequence acquisition, of the distance of each partial area of the surface of the scene from the camera is performed.

4. Method according to claims 2 to 3, **characterised in that** the materials in the material catalogue are assigned intervals for the reflectivity magnitude and for the contrast magnitude which depend additionally on the distance of that partial area of the surface of the scene from the camera for which the material is identified.

5. Method according to one of the preceding claims, **characterised in that** a deciding material catalogue for a predetermined material is created, which
a. indicates the presence of the predetermined material for at least one interval of the reflectivity magnitude and at least one interval of the contrast magnitude and
b. indicates the non-presence of the predetermined material for at least one interval of the reflectivity magnitude and at least one interval of the contrast magnitude and
c. indicates the presence of an unknown material for all other reflectivity magnitudes and contrast magnitudes.

6. Method for material-based image segmentation of a sequence of images of a scene, acquired by means of an electronic camera, in a speed keeping up with the image sequence acquisition with the method according to claim 5, a partial area of the surface of the scene and the pixels imaging this partial area being allocated the predetermined material, **characterised in that**
a. for a first central pixel which is allocated an unknown material,
b. in a pixel environment of the first central pixel with predetermined distance N > 1
c. the coordinates of second central pixels which are allocated the presence of the predetermined material are determined and
d. a convex envelope is calculated from the coordinates,
e. the first central pixel being allocated the presence of the material when it is situated inside the calculated convex envelope, and otherwise being allocated the non-presence of the material, according to which
f. a decision on the further processing of the pixel is made.

7. Method according to claim 6, **characterised in that** the coordinates of the second central pixel and the convex envelope on a pixel environment with distance N=3 around the first central pixel are determined.

8. Use of the method according to one of claims 6 or 7 in the image segmentation of a sequence of images of a scene in which the predetermined material allocated to a partial area of the surface of the scene is a biological tissue, in particular human skin.

9. Use of the method according to one of claims 6 or 7 in the image segmentation of a sequence of images of a scene in which a human hand executes movements in front of a projection screen while the projection screen is illuminated with visible computer-generated graphics.

10. Use of the method according to one of claims 6 or 7 in the image segmentation of a sequence of images of a scene in which a human hand executes movements in contact with a projection screen while the projection screen is illuminated with visible computer-generated graphics.

11. Use of the method according to one of claims 6 or 7 in the image segmentation of a sequence of images of a scene in which a human hand executes movements in contact with a projection screen and deforms the projection screen and deforms the projection screen while the projection screen is illuminated with visible computer-generated graphics.

## Revendications

1. Procédé d'évaluation d'un matériau dans une séquence d'images d'une scène saisies au moyen d'une caméra électronique, à une vitesse suivant le même rythme que la saisie de la séquence d'images, **caractérisé par** les étapes suivantes :
a. l'éclairage de la surface de la scène reproduite sur la caméra au moyen d'une lumière de mesure dans une plage spectrale non visible,
b. la lumière de mesure étant structurée de telle sorte qu'au maximum un septième de la surface de la scène reproduite sur la caméra est éclairé,
c. la saisie de la part de l'intensité de la lumière de mesure envoyée sur chaque pixel de la caméra par représentation de la scène,
d. la sélection d'un pixel central et de son environnement de pixels avec un écart 1 en tant qu'ensemble continu de pixels,
e. la détermination de la valeur de mesure d'intensité maximale de l'ensemble de pixels et l'attribution de cette valeur en tant qu'indice de réflectivité au pixel central,
f. la détermination de la différence de valeur de mesure d'intensité maximale de deux pixels de l'ensemble de pixels et l'attribution de cette valeur en tant qu'indice de contraste au pixel central,
g. la comparaison de l'indice de réflectivité et de l'indice de contraste à un catalogue de matériau déjà connu et l'identification d'un matériau,
h. l'attribution du matériau à la partie de la surface de la scène qui est reproduite sur le pixel central, et
i. la répétition des étapes d à h pour une liste prédéfinie de pixels centraux, l'éclairage structuré des étapes a et b étant conçu pour une utilisation dans un procédé de détermination de profondeur.

2. Procédé selon la revendication 1, **caractérisé en ce que** le catalogue de matériau déjà connu comprend un tableau dans lequel respectivement au moins un intervalle pour l'indice de réflectivité et au moins un intervalle pour l'indice de contraste, pendant l'éclairage selon les étapes a et b, sont associés à une sélection de matériau.

3. Procédé selon la revendication 2, **caractérisé en ce qu'**une mesure de la distance entre la caméra et chaque partie de la surface de la scène est effectuée au même rythme que la saisie de la séquence d'images.

4. Procédé selon les revendications 2 à 3, **caractérisé en ce que** des intervalles pour l'indice de réflectivité et pour l'indice de contraste sont attribués aux matériaux dans le catalogue de matériau, lesquels indices dépendent en plus de la distance entre la caméra et ladite partie de la surface de la scène, pour laquelle le matériau est identifié.

5. Procédé selon l'une des revendications précédentes, **caractérisé en ce qu'**un catalogue de matériau déterminant est élaboré pour un matériau prédéfini, lequel
a. indique, pour au moins un intervalle de l'indice de réflectivité et au moins un intervalle de l'indice de contraste, la présence du matériau prédéfini et
b. indique, pour au moins un intervalle de l'indice de réflectivité et au moins un intervalle de l'indice de contraste, l'absence du matériau prédéfini et
c. indique, pour tous les autres indices de réflectivité et indices de contraste, la présence d'un matériau inconnu.

6. Procédé de segmentation d'image, basée sur un matériau, d'une séquence d'images d'une scène saisies au moyen d'une caméra électronique à une vitesse allant au même rythme que la saisie d'images au moyen du procédé selon la revendication 5, le matériau prédéfini étant attribué à une partie de la surface de la scène et aux pixels reproduisant cette surface, **caractérisé en ce que**
a. pour un premier pixel central auquel un matériau inconnu est attribué,
b. dans un environnement de pixels du premier pixel central avec un écart prédéfini N>1
c. les coordonnées de deuxièmes pixels centraux, auxquels la présence du matériau prédéfini a été attribuée, sont déterminées et
d. une enveloppe convexe est calculée à partir des coordonnées,
e. la présence du matériau étant attribuée au premier pixel central s'il se situe à l'intérieur de l'enveloppe convexe calculée, sinon c'est l'absence du matériau qui y est attribuée, puis
f. il est décidé du traitement ultérieur du pixel.

7. Procédé selon la revendication 6, **caractérisé en ce que** les coordonnées des deuxièmes pixels centraux et l'enveloppe convexe sont déterminées sur un environnement de pixels avec un écart N=3 autour du premier pixel central.

8. Utilisation du procédé selon l'une des revendications 6 ou 7 pour la segmentation d'images d'une séquence d'images d'une scène, dans laquelle le matériau prédéfini attribué à une partie de la surface de la scène est un tissu biologique, en particulier de la peau humaine.

9. Utilisation du procédé selon l'une des revendications 6 ou 7 pour la segmentation d'images d'une séquence d'images d'une scène, dans laquelle une main humaine exécute des mouvements devant un écran de projection pendant qu'un graphique visible généré par ordinateur est projeté sur l'écran de projection.

10. Utilisation du procédé selon l'une des revendications 6 ou 7 pour la segmentation d'images d'une séquence d'images d'une scène, dans laquelle une main humaine exécute des mouvements en étant en contact avec un écran de projection pendant qu'un graphique visible généré par ordinateur est projeté sur l'écran de projection.

11. Utilisation du procédé selon l'une des revendications 6 ou 7 pour la segmentation d'images d'une séquence d'images d'une scène, dans laquelle une main humaine exécute des mouvements en étant en contact avec un écran de projection et déforme l'écran de projection, pendant qu'un graphique visible généré par ordinateur est projeté sur l'écran de projection.
